# EUROPÄISCHE PATENTANMELDUNG

(11) **EP 1 842 651 A2**
(43) Veröffentlichungstag der Anmeldung: **10.10.2007**
(21) Anmeldenummer: 07007060.2
(22) Anmeldetag: 04.04.2007
(51) Int. Cl.: B29C 51/32, B29C 51/04, B29C 51/06

(54) **Formwerkzeug zum Tiefziehen und Ausstanzen von Behältern aus einer erwärmten thermoplastischen Kunststofffolie und Verfahren zum Tiefziehen und Ausstanzen von Behältern**

(30) Priorität: 08.04.2006 DE 102006016686
(71) Anmelder: ILLIG Maschinenbau GmbH & Co. KG, 74081 Heilbronn (DE)
(72) Erfinder: Eisele, Klaus, 74336 Brackenheim (DE); Müller, Thomas, 74193 Schwaigern (DE)

(57) **Zusammenfassung**

Eine Formwerkzeug zum Formen und Ausstanzen von Behältern aus einer erwärmten thermoplastischen Kunststofffolie (1) wird so ausgebildet, dass ein vergrößerten Einzugsbereich beim Tiefziehen entsteht und auch tiefe Behälter mit senkrechter Behälterwand und Behälter mit Hinterschnitt so geformt werden können, dass diese eine gleichmäßige Wandstärke aufweisen und keine Deformationsgefahr des Behälterrandes beim Austrennen besteht.

Dies wird erreicht dadurch erreicht, dass die Schnittteile, die den Formteilen (25,54) zugeordnet sind, als Schnittplatte (35) ausgebildet sind und eine Relativverschiebung zwischen beiden möglich ist.

## Beschreibung

Die Erfindung betrifft ein Formwerkzeug zum Tiefziehen und Ausstanzen von Behältern aus einer erwärmten thermoplastischen Kunststofffolie nach der Gattung des Hauptanspruches sowie ein Verfahren zum Tiefziehen und Ausstanzen von Behältern mit einem solchen Formwerkzeug.

Aus der Druckschrift DE 7 001 963 ist eine Vorrichtung zur Herstellung von dünnwandigen Behältern aus einer thermoplastischen Kunststofffolie bekannt, welche insbesondere für die Produktion tiefer Behälter mit steiler Seitenwand vorgesehen ist. Durch das Verschieben des Vorrichtungsunterteils in Richtung der Kunststofffolie wird die zuvor erwärmte Kunststofffolie zwischen jeweiligen Dichträndern des Ober- und Unterteils eingespannt. Der Streckhelfer wird in Richtung auf die Kunststofffolie verschoben und streckt die Folie mechanisch vor. Während dessen Verschiebung wird in das Unterteil Druckluft so zugeführt, dass sich ein ringförmiges Luftpolster zwischen Behälterformteilen und der Folie ausbildet, welches eine Berührung der Form durch die Folie verhindert und so eine gleichmäßige Ausdehnung der Folie erlaubt. Das Ausformen und Ausstanzen der Behälter erfolgt in an sich bekannter Weise. Diese Vorrichtung ist zur Herstellung von Behältern mit steiler Seitenwand vorgesehen. Bedingt durch die Schwierigkeit, ein solches Luftpolster zwischen den Behälterformteilen und dem gekühlten Niederhalter und der ihn umgebenden Führungshülse auszubalancieren, kann es dabei zum Kontakt der Kunststofffolie mit dem Niederhalter oder der Führungshülse kommen, wodurch Wärme von der Kunststofffolie zum Niederhalter oder zur Führungshülse übertragen wird, was zur Ungleichmäßigkeit in der Ausformung bezüglich der Wandstärke der Behälter führt.

Aus der Druckschrift DE 600 04 734 T2 sind ein Verfahren zum Herstellen von Behältern mit Hinterschnitt aus thermoplastischer Kunststofffolie und ein Formwerkzeug bekannt, bei dem zum Entformen des fertigen Behälters die beweglichen Elemente in horizontaler und vertikaler Richtung dergestalt geöffnet werden, dass die Behälter durch Ansaugen gegen ein Bodenelement des Formwerkzeugs zur Entnahme vertikal nach unten verschoben werden. Da nur der obere Teil des Formwerkzeugs, das den Siegelflansch und den Halsbereich formt, horizontal geöffnet wird, das Mittelteil dagegen starr ausgebildet ist, muss der Durchmesser des Stanzrandes stets kleiner sein als der Durchmesser des mittleren, vertikalen Teils des Behälters. Dadurch wird die Gestaltungsfreiheit von Behältern mit Hinterschnitt stark eingeschränkt. Bereits beim Schließen des Formwerkzeugs wird die Folie durch den Schnittstempel am Außenrand des zu formenden Behälters eingeschnitten, sodass zum Tiefziehprozess kein Folienmaterial von außerhalb der Schnittlinie hereingezogen werden kann.

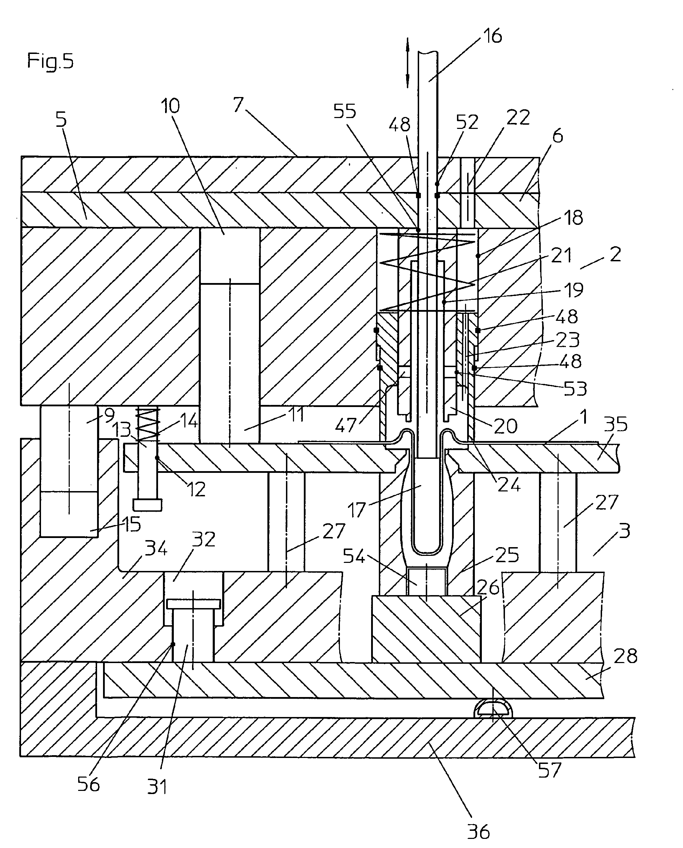

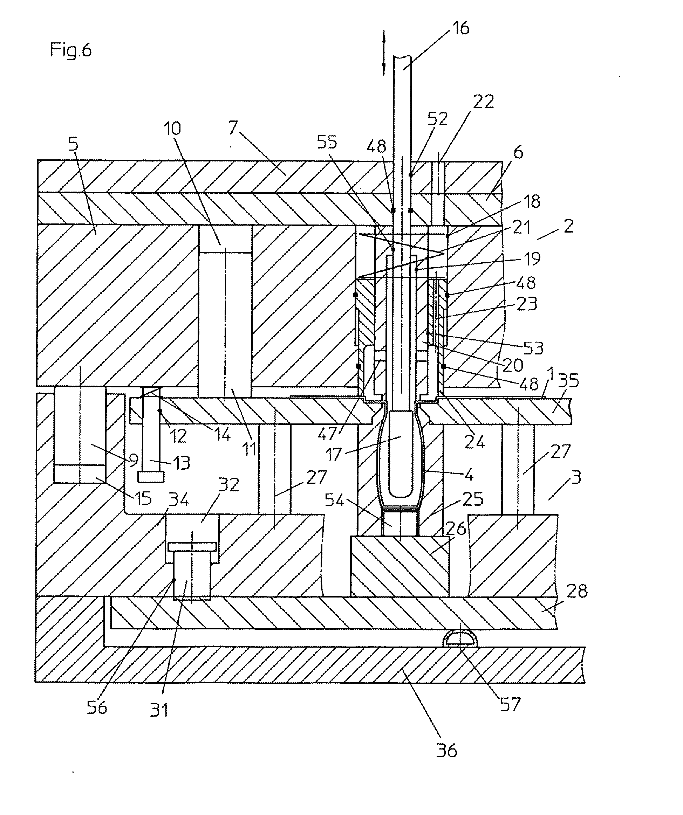

Die Druckschrift US 3,510,913 zeigt eine Vorrichtung zur Herstellung von dünnwandigen Behältern aus thermoplastischer Kunststofffolie, welche insbesondere für die Produktion tiefer, schlanker Behälter mit zylindrischer Seitenwand ohne Schräge vorgesehen ist. Ein erwärmter Abschnitt der Kunststofffolie wird zwischen Elementen des Ober- und Unterteils der Vorrichtung eingespannt. Während der mechanischen Verstreckung wird durch ein Vakuum, das an der Oberseite der Kunststofffolie anliegt, die Kunststofffolie an den Streckhelfer und an einen Einsatz gesaugt, der isoliert oder beheizt ist und mit einer Gleitschicht versehen ist. Entgegen der Vorstreckerbewegung wird ein Formteil dergestalt verschoben, dass am Ende der Vorstreckerbewegung das Formteil den Behälter vollständig umschließt. Anschließend wird zum Erzeugen der Differenzdruck von Vakuum auf Druckluft umgeschaltet und der Behälter wird gegen die Wand der Tiefziehform gepresst und so geformt. Der Behälter wird durch einen Stanzvorgang aus der Kunststofffolie ausgetrennt, wozu das Tiefziehform als Matrize ausgebildet ist. Wie man insbesondere aus den Figuren 5 und 6 ersieht wird beim Ausstanzen der Behälterrand in sich zusammengestaucht durch den eintauchenden Schnittstempel, was zu einer bleibenden Deformation führen kann.

Die Druckschrift DE 1 276 898 zeigt ein Verfahren und eine Vorrichtung zum Herstellen von Behältern aus thermoplastischer Kunststofffolie, bei dem die Kunststofffolie zwischen Klemmbacken gespannt und zunächst bei geöffnetem Formwerkzeug durch den Streckhelfer mechanisch vorgestreckt wird. Während der Bewegung des Streckhelfers wird das Unterteil des Formwerkzeugs in Richtung auf die Folienebene verschoben. Die beiden Werkzeughälften schließen sich und der Behälter wird durch Druckluft ausgeformt, durch das Zusammenwirken der als Schnittstempel ausgebildeten Formteile mit einer Matrize am Oberteil des Formwerkzeugs aus der Folie ausgetrennt und durch Auswerfer entformt. Behälter mit Hinterschnitt lassen sich mit diesem Formwerkzeug nicht herstellen.

Die Druckschrift DE 1 276 900 zeigt eine Vorrichtung zum Herstellen von Behältern aus thermoplastischer Kunststofffolie, bei der das Werkzeugunterteil dergestalt vertikal verschiebbar und um 90° schwenkbar ausgebildet ist, dass das Werkzeugunterteil mit den von der Kunststofffolie abgetrennten Behältern abgesenkt wird und nach dem Schwenken die Behälter durch Ausblasen entformt werden. Das Trennen der Behälter nach dem Ausformen erfolgt durch das Verschieben des Werkzeugunterteils in Richtung der Kunststofffolie. Bei der Annäherung des unteren Schneidringes stützt sich der Formeinsatz am oberen Schneidring ab und fixiert die Kunststofffolie. Bei der weiteren Bewegung des Unterteils wird der untere Schneidring weiter nach oben verschoben und durchtrennt im Zusammenwirken mit dem oberen Schneidring die Kunststofffolie. Behälter mit Hinterschnitt lassen sich mit diesem Formwerkzeug nicht herstellen.

Der Erfindung liegt die Aufgabe zugrunde, ein Formwerkzeug zum Tiefziehen und Ausstanzen von Behältern aus einer thermoplastischen Kunststofffolie so auszubilden, dass sowohl tiefe Behälter mit steiler Seitenwand als auch Behälter mit Hinterschnitt hergestellt werden können, wobei ein Einzug von Kunststoffmaterial von außerhalb der Schnittlinie zur Behälterbildung erfolgt und keine Deformationsgefahr beim Ausstanzen besteht. Eine möglichst gleichmäßige Wanddicke der Behälter sollte erreicht werden.

Zur Lösung der Aufgabe werden die kennzeichnenden Merkmale des Hauptanspruches vorgeschlagen. Weiterbildungen sind in den Unteransprüchen beschrieben. Das wesentliche Merkmal gegenüber bekannten Formwerkzeugen besteht darin, dass die Schnittteile, die den Formteilen zugeordnet sind, nicht starr mit diesen verbunden sind, sondern eine Relativverschiebung zwischen beiden möglich ist. Dies ermöglicht es, die den Formteilen zugeordneten Schnittteile als Matrize auszubilden und im gegenüberliegenden Oberteil des Formwerkzeugs Schnittstempel anzuordnen. Dabei gibt es verschiedene Ausführungsformen der Anordnung der als Schnittplatte ausgebildeten Schnittteile, die nachfolgend als erste bis vierte Ausführungsform bezeichnet werden. Alle Ausführungsformen ermöglichen ein Verfahren, das einen vergrößerten Einzugsbereich beim Tiefziehen bietet und mit dem tiefe Behälter sowohl mit steiler oder mit senkrechter Behälterwand als auch Behälter mit Hinterschnitt so geformt werden können, dass eine gleichmäßige Wandstärke entsteht und eine Deformationsgefahr des Behälterrandes nicht gegeben ist. Unter Formteile werden dabei die Teile des Formwerkzeugs verstanden, die an der Formgebung des Behälters beteiligt sind.

Ausführungsbeispiele der Erfindung sind nachfolgend anhand der schematischen Zeichnungen näher beschrieben. Es zeigen:
- Fig. 1 bis 8: ein Formwerkzeug gemäß einer ersten Ausführungsform in verschiedenen Phasen des Verfahrensablaufs
- Figur 9: eine Variante des Formwerkzeugs mit einem anderen Antrieb der Grundplatte
- Figur 10: eine Variante des Formwerkzeugs bezüglich der Formluftzuführung und Niederhalterbetätigung
- Figur 11: die vierte Ausführungsform des Formwerkzeugs
- Figur 12: die zweite Ausführungsform des Formwerkzeugs
- Figur 13: eine Variante des Formwerkzeugs bezüglich des Antriebs des Niederhalters
- Figur 14: verschiedene vorteilhafte Ausbildung des Formwerkzeugs
- Figur 15: die dritte Ausführungsform des Formwerkzeugs
- Figur 16: eine Variante des Formwerkzeugs bezüglich des Antriebs des Schnittstempels
- Figur 17: eine Variante des Formwerkzeugs bezüglich der Gestaltung des Niederhalters
- Figur 18: eine vorteilhafte Ausbildung des Formwerkzeugs bezüglich Niederhalterkühlung
- Figur 19: eine Variante des Formwerkzeugs bezüglich Verschiebung der Formteile
- Fig. 20 bis 22: Gestaltungen des Formwerkzeugs bei verschiedenen Behälterformen.

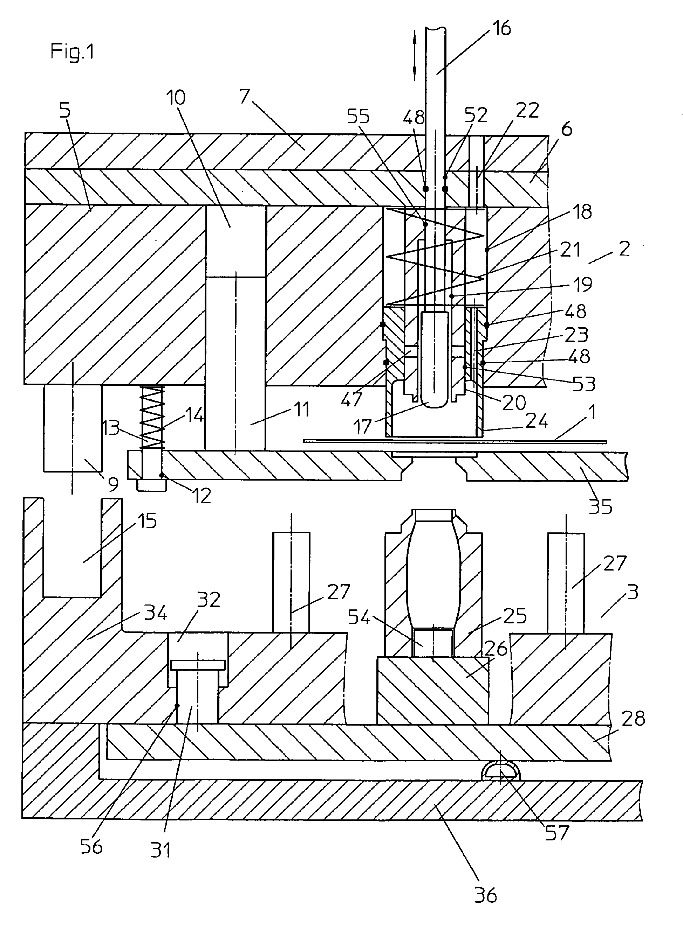

Das Formwerkzeug wird eingebaut in die Formstation eines Thermoformautomaten zur Verarbeitung von thermoplastischer Kunststofffolie. Fig. 1 zeigt das Formwerkzeug gemäß einer ersten Ausführungsform in einer geöffneten Stellung. Es umfasst ein Oberteil 2, welches an einem Obertisch 7 der Formstation lösbar befestigt wird. Das Oberteil 2 umfasst einen Kühlblock 5, in dem Bohrungen 18 entsprechend der Anzahl der Formnester des Formwerkzeugs angeordnet sind. In jeder Bohrung 18 sitzt ein verschiebbarer Niederhalter 24 zum Einspannen einer Kunststofffolie 1, nachgiebig gehalten von einer Feder 21. In einer Bohrung 53 des Niederhalters 24 verläuft der Schnittstempel 20, der an der Kopfplatte 6 befestigt ist. An dieser sitzt auch der Kühlblock 5, sie ist mit dem Obertisch 7 der Formstation verbunden. In einer Bohrungen 55 des Schnittstempels 20 und einer Bohrung 52 im Obertisch 7 ist eine Streckhelferstange 16 koaxial geführt, sie trägt einen Streckhelfer 17 und dieser findet Platz in einer Bohrung 19 im Schnittstempel 20. Der Kühlblock 5 weist ferner mindestens zwei Bolzen 9 auf.

Das Unterteil 3 umfasst einen am Untertisch 36 der Formstation angeordneten Rahmen 34 und Formteile 25, 54 zur Formgebung von Behältern 4, die aus der Kunststofffolie 1 tiefgezogen werden. Die Formteile 25, 54 sitzen auf einem Unterbau 26, dieser auf einer Grundplatte 28. Über Bundbolzen 31 wird die Grundplatte 28 in Bohrungen 56 im Rahmen 34 geführt, eine Bohrung 32 nimmt den Bund der Bundbolzen 31 auf. Eine Betätigungsmembran 57 dient dazu, die Grundplatte 28 höhenmäßig zu verschieben. Auf dem Rahmen 34 sind Stützen 27 befestigt. Im Rahmen 34 sitzen Bohrungen 15, die mit den Bolzen 9 zusammen die Führung von Oberteil 2 zum Unterteil 3 übernehmen. Die Anordnung von Bolzen 9 und Bohrung 15 ist natürlich auch spiegelbildlich ausführbar und die Führung ist durch andere bekannte Elemente erreichbar.

Zwischen Oberteil 2 und Unterteil 3 ist eine Schnittplatte 35 angeordnet. Sie ist gemäß der ersten Ausführungsform des Formwerkzeugs (Fig. 1- 8) mit Bolzen 11 verbunden, die in Bohrungen 10 im Kühlblock 5 geführt sind. Bolzen 13, geführt in Bohrungen 12 in der Schnittplatte 35, begrenzen ihren Hub, Federelemente 14 drücken die Schnittplatte 35 gegen den Bund der Bolzen 13. Die Kunststofffolie 1 wird zwischen der Schnittplatte 35 und der Stirnseite der Niederhalter 24 hindurchgeführt.

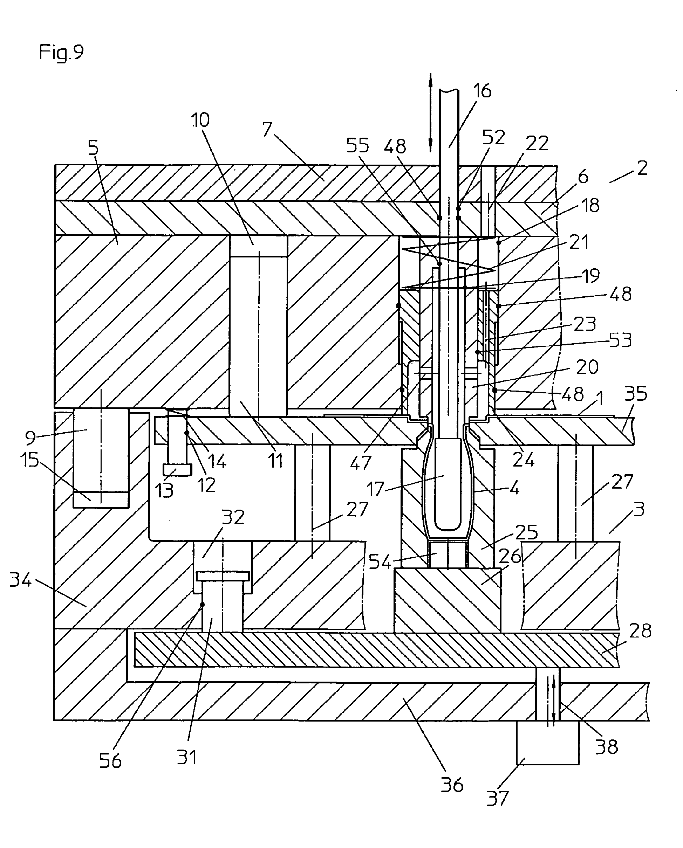

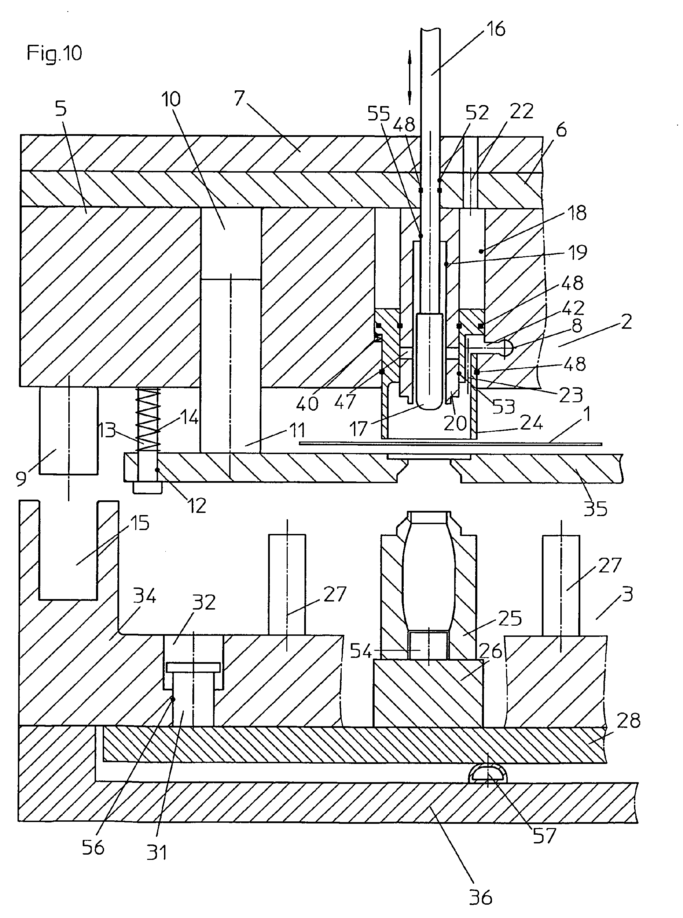

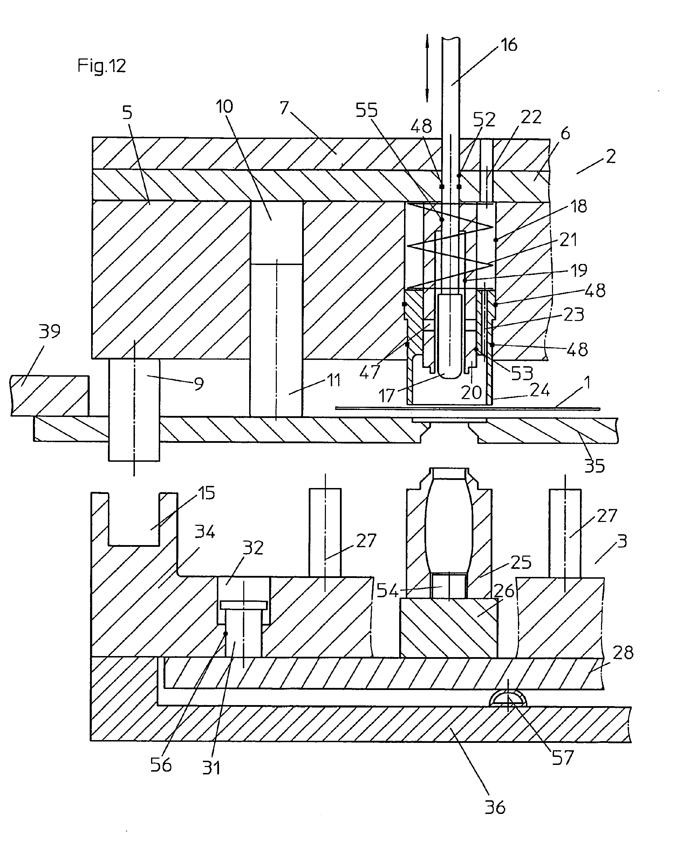

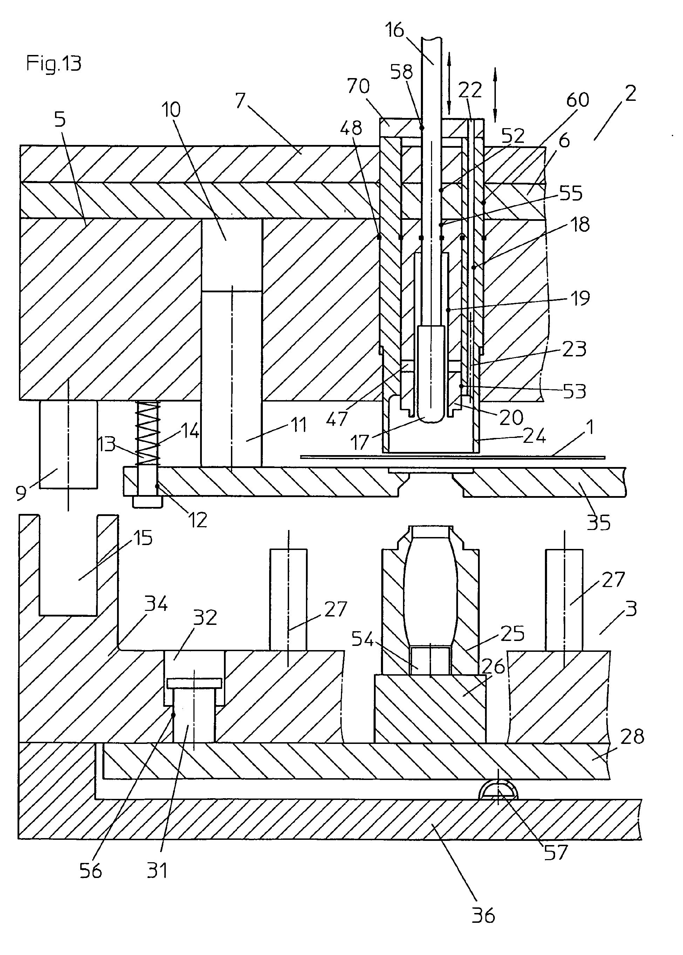

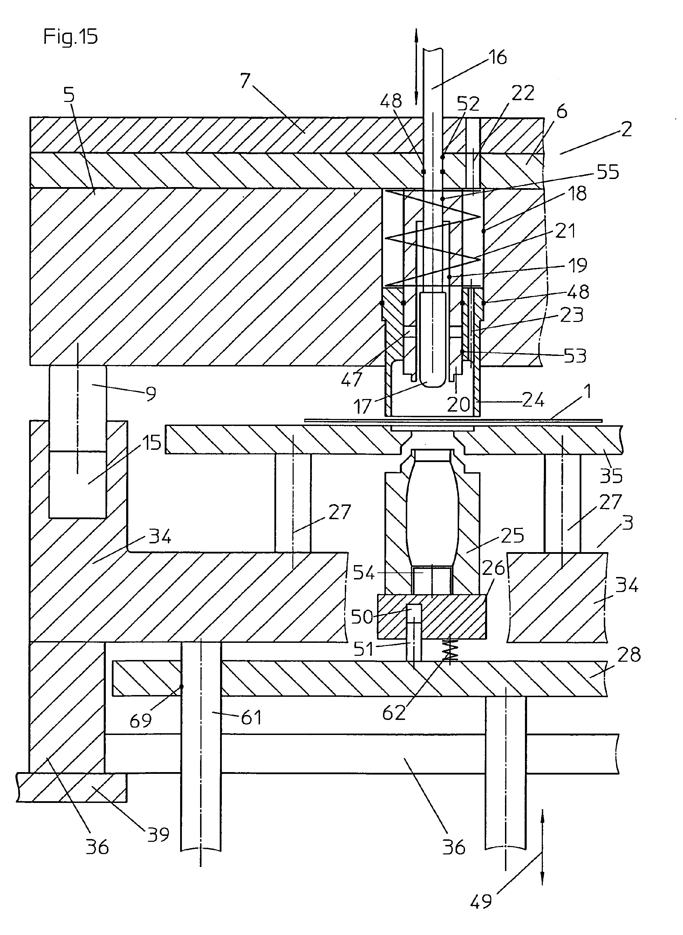

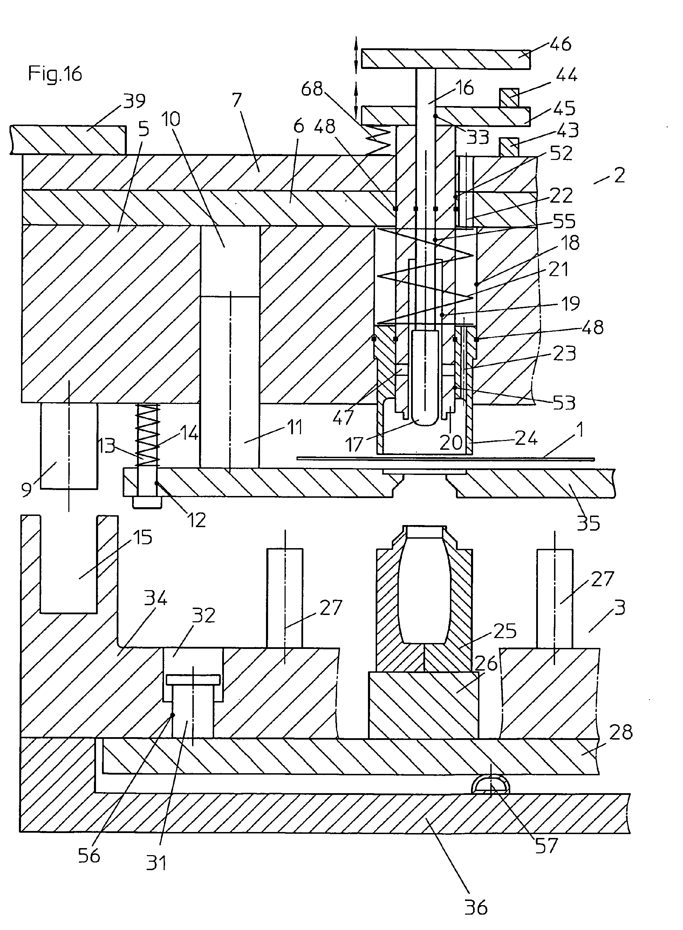

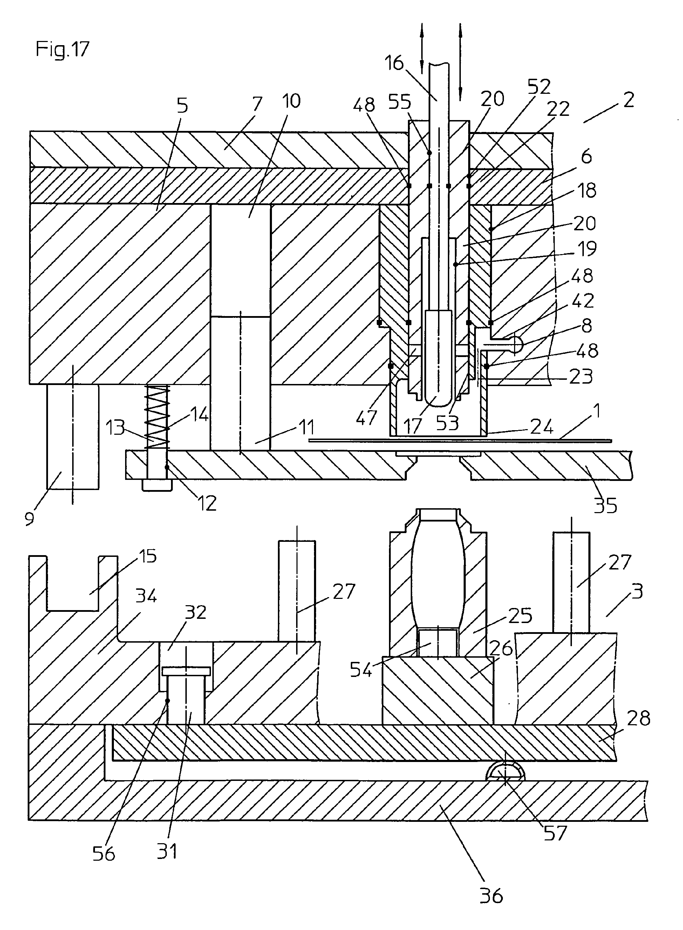

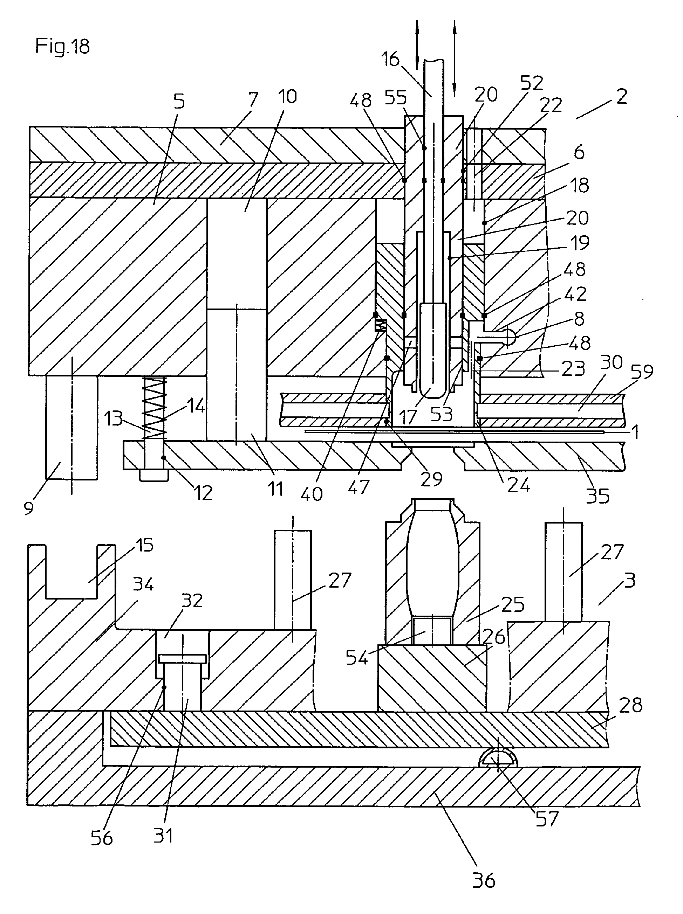

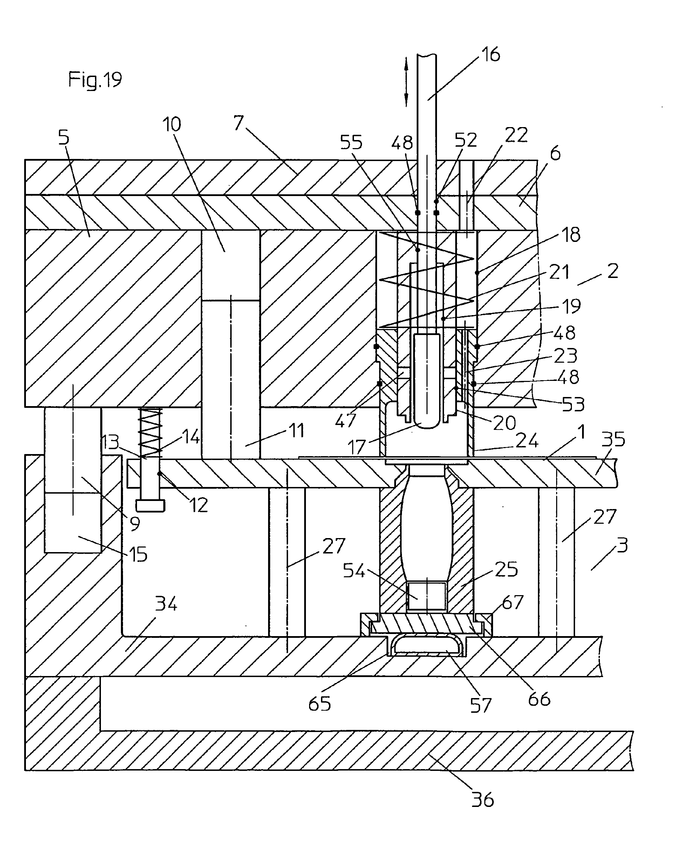

Die in den Figuren 1 bis 8 beschriebene erste Ausführungsform des Formwerkzeugs kann in Einzelheiten variiert werden. So ist es möglich, den Schnittstempel 20 verschiebbar über einen separaten Antrieb zum Oberteil auszubilden (Figuren 16, 17, 18), wobei dann der Niederhalter 24 wahlweise verschiebbar (Figur 16, 18) oder starr (Figur 17) zum Oberteil 2 ausgebildet ist.
Die Betätigung des verschiebbaren Niederhalters 24 kann entweder durch Federn 21 allein oder durch Druckluftzufuhr auf deren Oberseite über Bohrungen 22 (Figur 10, 12) oder kombiniert durch beides erfolgen. Im Falle der Betätigung über Druckluft erfolgt die Formluftzufuhr über eine Stichbohrung 8 und über eine Bohrung. 42 im Kühlblock 5 sowie über eine Bohrung 23 im Niederhalter 24. Die Aufwärtsbewegung der Niederhalter 24 kann in diesem Fall über Federn 40 unterstützt werden. Dichtungen 48 dienen der Abdichtung der Formluft.
Ferner kann der Niederhalter 24 wie in Figur 13 dargestellt über einen eigenen Antrieb verschiebbar ausgebildet sein. Er ragt dazu durch eine Bohrung 60 durch Kopfplatte 6 und Obertisch 7 hindurch. Sein Deckel 70 weist eine Bohrung 58 zum Durchführen der Streckhelferstange 16 auf. Der Antrieb ist nicht dargestellt.
Ferner kann der Schnittstempel 20 wie in Fig. 16 dargestellt über einen eigenen pneumatischen oder motorischen Antrieb bewegt werden. Er ist dazu über die Bohrung 52 in Kopfplatte 6 und Obertisch 7 nach außen verlängert und alle Schnittstempel 20 des Formwerkzeugs sind über die Platte 45 verbunden. Alle Streckhelferstangen 16 ragen durch die Bohrung 33 in der Platte 45 und sitzen an der Platte 46. Distanzen 43, 44 dienen der Abstandshaltung zwischen der Platte 45 und der Platte 46 sowie zwischen Platte 45 und Obertisch 7. Über nicht dargestellte Antriebe sind die Platten 45 und 46 einzeln verschiebbar. Federelemente 68 dienen der Abhebung der Platte 45 und damit der Schnittstempel 20.
Ferner ist anstelle der Betätigungsmembran 57 zum Bewegen der Grundplatte 28 auch ein Antrieb in Form eines Zylinders 37, geführt in einer Bohrung 38 (Figur 9) oder ein Antrieb 49 (Fig. 15) in Form eines Kniehebelantriebes einsetzbar.
Ferner ist die Nachgiebigkeit der Formteile 25, 54 relativ zur Schnittplatte 35 für den Austrennvorgang auch in der Weise herbeiführbar, dass die Formteile 25, 54 verschiebbar zum Rahmen 34 gehalten werden, wie in Figur 19 dargestellt. Sie sitzen dazu auf einer Druckplatte 66, die über Rückhalter 67 gehalten ist und die über eine Betätigungsmembran 57, die in einer Bohrung 65 sitzt, verschiebbar ist.

In Figur 12 ist eine zweite Ausführungsform des Formwerkzeugs dargestellt. Die Schnittplatte 35 ist über Bolzen 11 starr mit dem Kühlblock 5 verbunden. Bei dieser Gestaltung sind sowohl der Niederhalter 24 als auch der Schnittstempel 20 jeweils verschiebbar zum Kühlblock 5 wie bereits beschrieben ausgebildet, um das erfindungsgemäße Verfahren durchführen zu können. Die zuvor beschriebenen Variationen der Bewegung der Formteile 25, 54 sind bei dieser Ausführung wahlweise wie bei der ersten Anwendungsform anwendbar, Bei dieser Gestaltung ist das Oberteil 2 ortsfest am Maschinenrahmen 39 der Thermoformmaschine befestigt.

In Figur 15 ist eine dritte Ausführungsform_dargestellt. In diesem Fall ist die Schnittplatte 35 starr über die Stützen 27 mit dem Rahmen 34 verbunden, die Formteile 25, 34 sitzen auf dem Unterbau 26, der über Federn 62 und Bolzen 51, geführt in je einer Bohrung 50, verschiebbar auf einer Grundplatte 28 angeordnet ist. Diese Grundplatte 28 ist durch einen Antrieb 49 höhenverschiebbar zum Rahmen 34 und wird an Bolzen 61 geführt, die am Rahmen 34 befestigt sind. Sie weist hierzu Bohrungen 69 auf. Die Höhenverschiebung der Grundplatte 28 ist erforderlich, um die Formteile 25, 54 in eine Position auf Abstand zur Schnittplatte 35 zu verfahren, in der das Entformen der ausgetrennten Behälter 4 erfolgen kann.
Dargestellt sind in Figur 15 ein verschiebbar ausgebildeter Niederhalter 24 und ein starr an der Kopfplatte 6 befestigter Schnittstempel 20. Es ist eine Gestaltung dieser Ausführungsform des Formwerkzeugs mit einem verschiebbaren Schnittstempel 20 und einem starren Niederhalter 24 (wie in Figur 17 dargestellt) oder mit einem verschiebbaren Schnittstempel 20 und einem verschiebbaren Niederhalter (wie in Figur 16 oder 18 dargestellt) möglich. Dabei kann die Verschiebung des Schnittstempels 20 wieder pneumatisch oder motorisch erfolgen. Die Betätigung der Niederhalter 24 kann entweder über Federn 21 und/oder durch Druckluftzufuhr über die Bohrung 22 erfolgen.

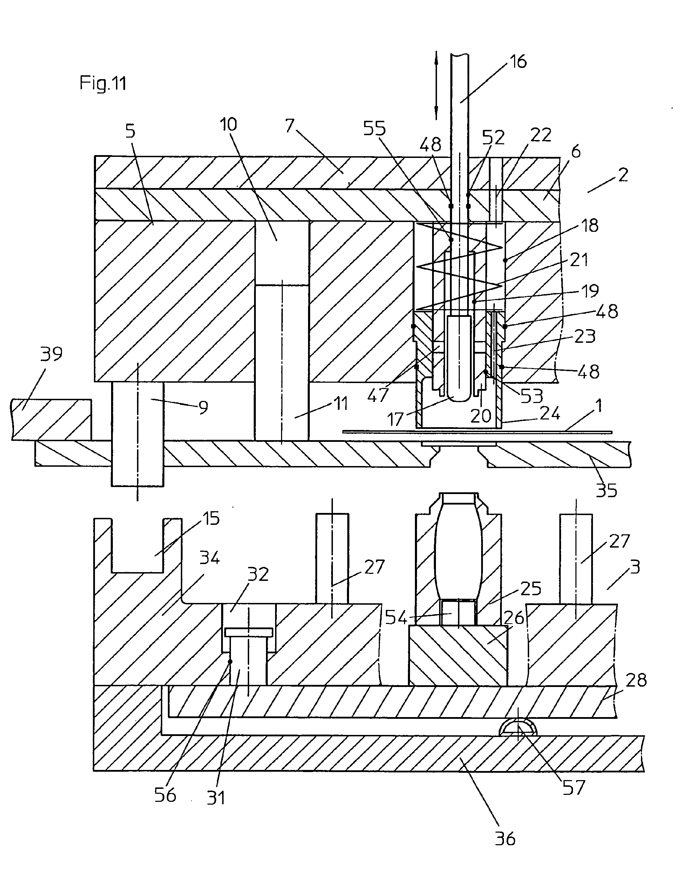

In Figur 11 ist eine vierte Ausführungsform des Formwerkzeugs dargestellt. Die Besonderheit dieser Ausführung besteht darin, dass die Schnittplatte 35 weder dem Oberteil 2 noch dem Unterteil 3 bezüglich seiner Befestigung zugeordnet ist, sondern an der Formstation der Thermoformmaschine, vorzugsweise am Maschinenrahmen 39, befestigt wird. Sie steht also während des Verfahrensablaufes immer still, Oberteil 2 und Unterteil 3 bewegen sich relativ zu ihr, sodass prinzipiell derselbe Verfahrensablauf erzielbar ist. Die zuvor bei der ersten Ausführungsform des Formwerkzeugs beschriebenen Variationen bezüglich Betätigung der Niederhalter 24, des Antriebs der Schnittstempel 20, der Anordnung der Formteile 25, 54 zum Rahmen 34 bzw. auf einer Grundplatte 28 sowie deren Betätigung sind vergleichbar anwendbar.

### Alle vier Ausführungsformen ermöglichen noch folgende vorteilhafte Ausbildungen:

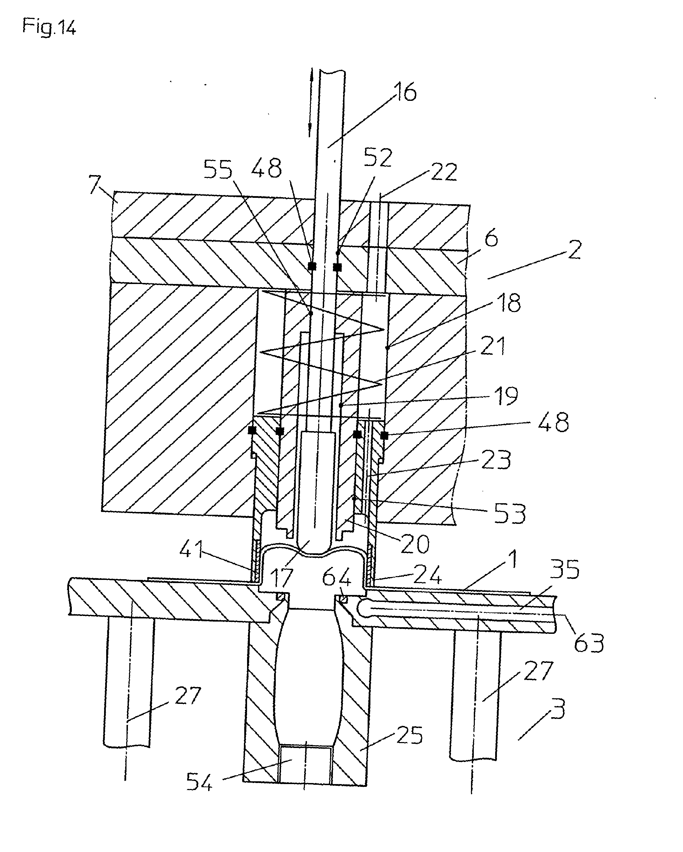

Wie aus Figur 14 ersichtlich wird vorgeschlagen, in die Schnittplatte 35 Schnittringe 64 einzubauen, die die Schnittkante des Durchfallschnittes bilden und im Falle eines Defekts leichter ausgetauscht werden können als die ganze Schnittplatte 35 zu tauschen.
Ferner wird vorgeschlagen, die Innenseite der Niederhalter 24 mit einer Isolation 41 zu versehen, um eine Abschreckung der tiefzuziehenden Folie zu minimieren, sollte diese an dieser Stelle den Niederhalter 24 berühren. Dies ist vor allem dann wichtig, wenn eine Kühlung der Niederhalter 14 wie aus Figur 18 durch eine um den Niederhalter 24 angeordnete Kühlplatte 59 erfolgt, in deren Kühlbohrung 30 Kühlflüssigkeit zugeführt wird. Dazu weist die Kühlplatte 59 Bohrungen 29 auf.
Eine weitere Ausbildung besteht darin, in der Schnittplatte 35 Kühlbohrungen 63 einzubringen, um diese intensiv kühlen zu können.

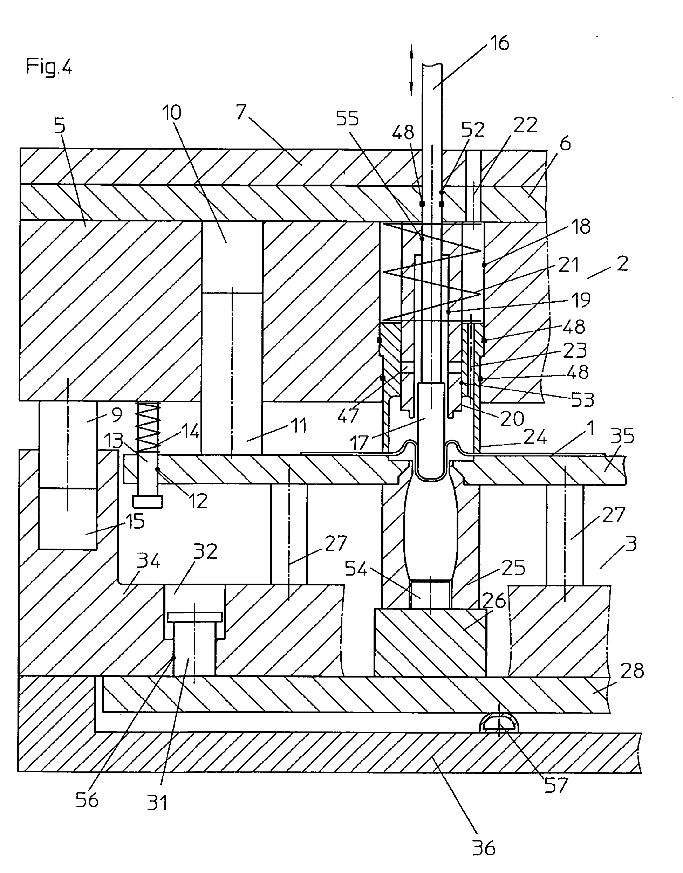

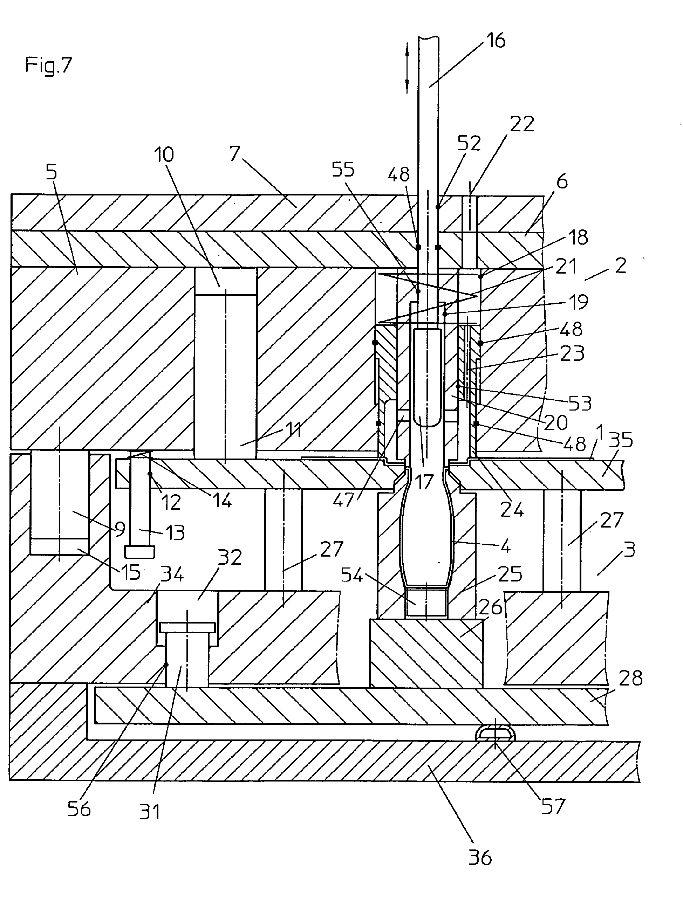

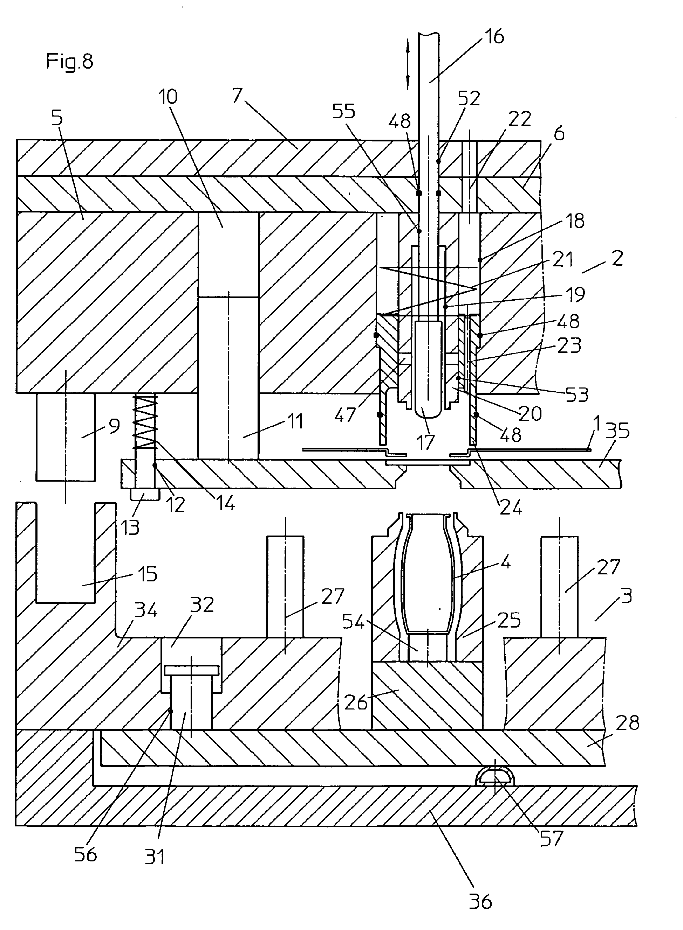

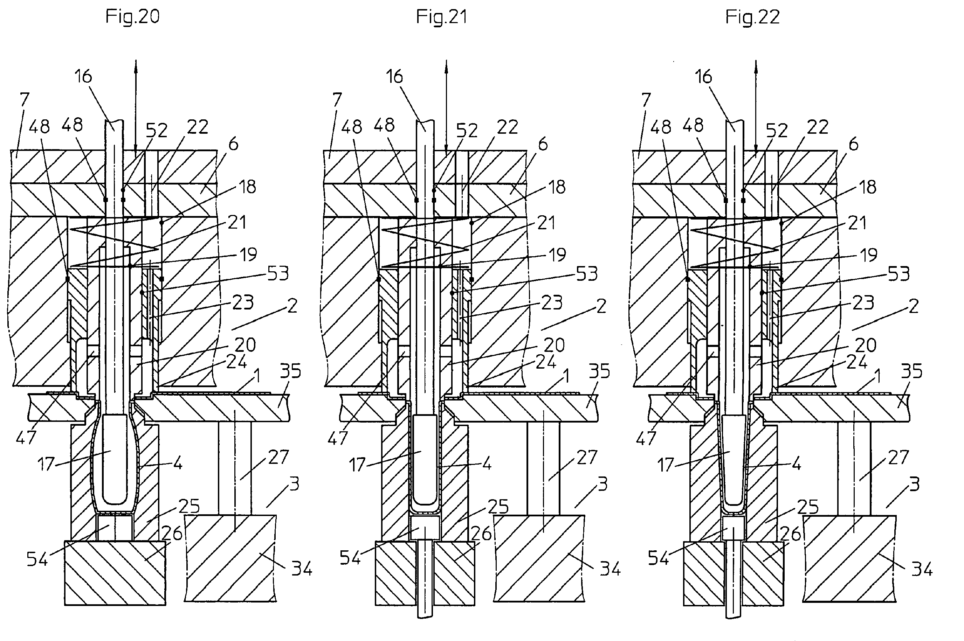

Das Verfahren zum Herstellen von Behältern 4 aus einer erwärmten thermoplastischen Kunststofffolie 1 durch Tiefziehen wird anhand der Figuren 1 bis 8 näher beschrieben und erfolgt in den folgenden Schritten:

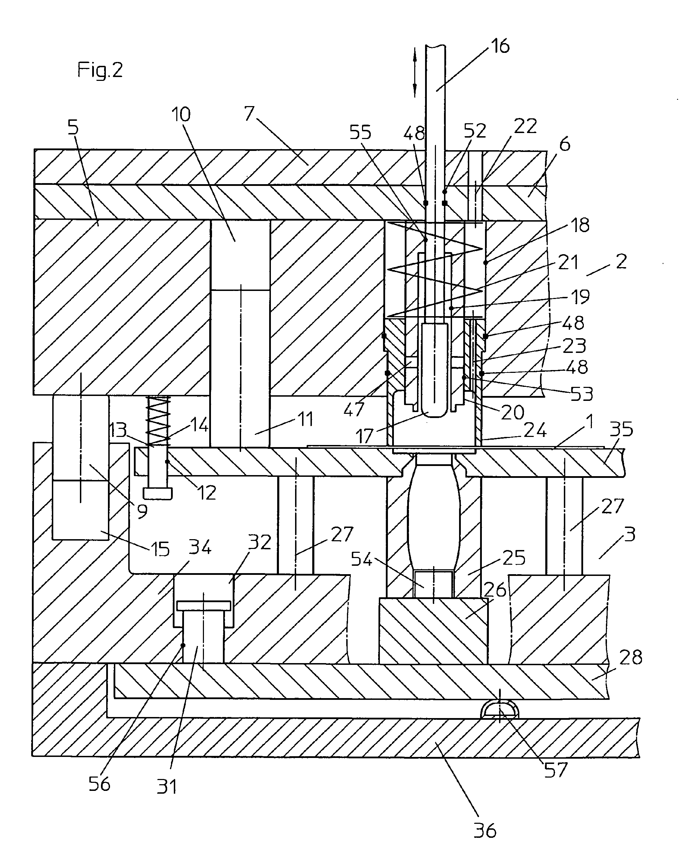

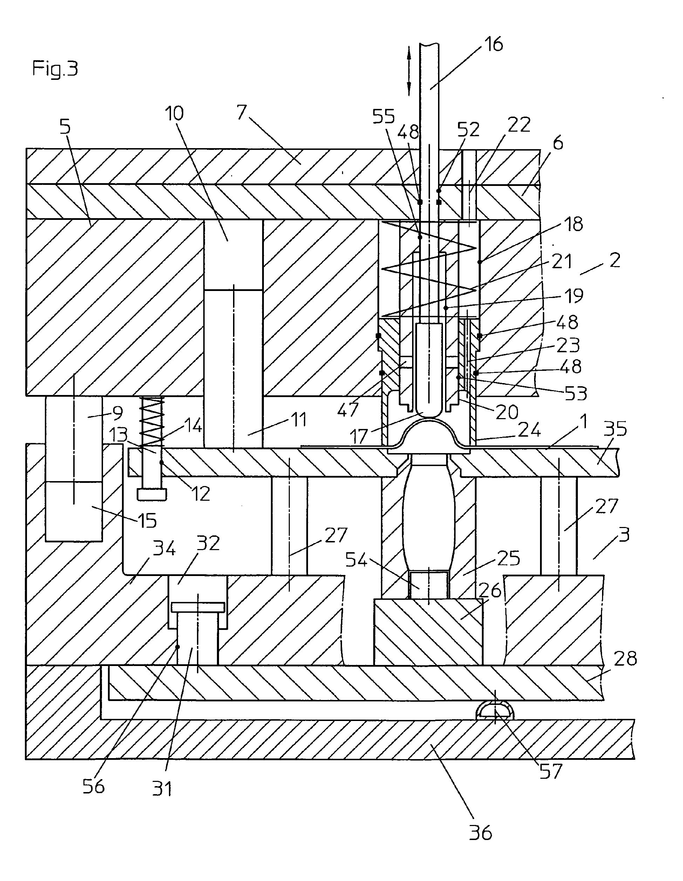

Fig. 1 stellt die Ausgangslage - geöffneter Zustand des Formwerkzeugs - dar. Ein Abschnitt der erwärmten Kunststofffolie 1 wird zwischen dem Oberteil 2 und der Schnittplatte 35 angeordnet. Zunächst wird der Untertisch 36 angehoben, bis zunächst die Formteile 25 zur Anlage an die Schnittplatte 35 gelangen, dann die Schnittplatte 35 zur Anlage an die Stützen 27 kommt und wird dann weiter angehoben, bis die Kunststofffolie 1 zwischen Niederhalter 24 und Schnittplatte 35 eingespannt ist (Lage Figur 2). Es folgt das pneumatische Vorformen der Kunststofffolie 1 in Richtung des Streckhelfers 17 (Fig.3) durch das Anlegen einer Druckdifferenz zwischen den beiden Seiten der Kunststofffolie 1. Dies kann entweder dadurch erfolgen, dass Vakuum über Bohrungen 22, 23 im Oberteil 1 angelegt wird oder durch Druckluftzufuhr ins Innere der Formteile 25 über nicht dargestellte Bohrungen.
Es schließt sich die mechanische Verformung durch den Streckhelfer 17 an (Fig. 4), der in Richtung auf die Kunststofffolie 1 verschoben wird, wobei die Druckdifferenz weiterhin ansteht. Fig. 5 zeigt das Ende der mechanischen Verformung durch den Streckhelfer 17, wobei die Druckdifferenz immer noch ansteht. Es folgt die pneumatische Ausformung der Behälter 4 an die Innenseite der Formteile 25, 54 durch Druckluftzufuhr über die Bohrungen 22, 23 und die Querbohrung 47 im Schnittstempel 20 sowie eine weitere Schließbewegung des Formwerkzeugs, z.B. durch eine Bewegung des Obertisches 3 (Lage Fig. 6). Durch eine weitere Schließbewegung des Formwerkzeugs erfolgt das Austrennen der Behälter 4, indem die Schnittstempel 20 in die Schnittplatte 35 eintauchen und dabei die Formteile 25, 54 relativ zur Schnittplatte 35 vertikal verschoben werden. Dies wird dadurch erreicht, dass die zuvor über die Betätigungsmembran 57 angehobene Grundplatte 28 abgesenkt wird (Fig. 7). Die Niederhalter 24 geben während des Austrennens entgegen der Kraft der Federn 21 weiter nach. Die Stützen 27 unterstützen die Schnittplatte 35 während des Austrennens.
Es folgt das Öffnen des Formwerkzeugs zum Entnehmen der Behälter 4, wobei eine Relativverschiebung zwischen der Schnittplatte 35 und den Schnittstempeln 20 sowie zwischen der Schnittplatte 35 und den Formteilen 25, 54 erfolgt. Die Entnahme der Behälter 4 erfolgt je nach Gestalt der Behälter 4 und Ausführung der Thermoformmaschine durch an sich bekannte Verfahren wie Verschwenken des Unterteils 3 und Entnahme durch Nachfolgevorrichtungen oder durch eine nur vertikale Verschiebung des Unterteils 3 und Entnahme der Behälter 4 durch eine Handlingvorrichtung.
In Abhängigkeit von der Behälterform werden die Formteile 25 von einander distanziert zur Entformung von Teilen mit Hinterschnitt (Fig. 8) oder sie werden im Zusammenwirken von auswerfendem Formteil 54 und den oben erwähnten Nachfolgeeinrichtungen wie Fangplatten von Stapelvorrichtungen entformt (Gestalt nach Fig. 21, 22).

### Bezugszeichentabelle

| | | | |
|---|---|---|---|
| 1 | Kunststofffolie | 36 | Untertisch |
| 2 | Oberteil | 37 | Zylinder |
| 3 | Unterteil | 38 | Bohrung |
| 4 | Behälter | 39 | Maschinenrahmen |
| 5 | Kühlblock | 40 | Feder |
| 6 | Kopfplatte | 41 | Isolation |
| 7 | Obertisch | 42 | Bohrung |
| 8 | Stichbohrung | 43 | Distanz |
| 9 | Bolzen | 44 | Distanz |
| 10 | Bohrung | 45 | Platte |
| 11 | Bolzen | 46 | Platte |
| 12 | Bohrung | 47 | Querbohrung |
| 13 | Bolzen | 48 | Dichtung |
| 14 | Federelement | 49 | Antrieb |
| 15 | Bohrung | 50 | Bohrung |
| 16 | Streckhelferstange | 51 | Bolzen |
| 17 | Streckhelfer | 52 | Bohrung |
| 18 | Bohrung | 53 | Bohrung |
| 19 | Bohrung | 54 | Formteil |
| 20 | Schnittstempel | 55 | Bohrung |
| 21 | Feder | 56 | Bohrung |
| 22 | Bohrung | 57 | Betätigungsmembran |
| 23 | Bohrung | 58 | Bohrung |
| 24 | Niederhalter | 59 | Kühlplatte |
| 25 | Formteil | 60 | Bohrung |
| 26 | Unterbau | 61 | Bolzen |
| 27 | Stütze | 62 | Feder |
| 28 | Grundplatte | 63 | Kühlbohrung |
| 29 | Bohrung | 64 | Schnittring |
| 30 | Kühlbohrung | 65 | Bohrung |
| 31 | Bundbolzen | 66 | Druckplatte |
| 32 | Bohrung | 67 | Rückhalter |
| 33 | Bohrung | 68 | Federelement |
| 34 | Rahmen | 69 | Bohrung |
| 35 | Schnittplatte | 70 | Deckel |

## Patentansprüche

1. Formwerkzeug zum Tiefziehen und Ausstanzen von Behältern aus einer erwärmten thermoplastischen Kunststofffolie, bestehend aus einem Oberteil mit einem Kühlblock, mindestens einem Niederhalter mit einem in ihm angeordneten Streckhelfer und einer ersten Schneideinrichtung sowie aus einem Unterteil mit einem Rahmen und Formteilen entsprechend der Gestalt der herzustellenden Behälter und bestehend aus einer zweiten Schneideinrichtung, **dadurch gekennzeichnet, dass** die erste Schneideinrichtung als Schnittstempel (20) und die zweite Schneideinrichtung als relativ zu der ersten Scheideinrichtung sowie relativ zu den Formteilen (25, 54) verschiebbare Schnittplatte (35) ausgebildet ist.

2. Formwerkzeug nach Anspruch 1, **dadurch gekennzeichnet, dass** die Schnittplatte (35) am Oberteil (2) verschiebbar gehalten ist und dass der Schnittstempel (20) starr am Oberteil (2) befestigt und der Niederhalter (24) verschiebbar am Oberteil (2) angeordnet ist.

3. Formwerkzeug nach Anspruch 1, **dadurch gekennzeichnet, dass** die Schnittplatte (35) am Oberteil (2) verschiebbar gehalten ist und dass der Schnittstempel (20) verschiebbar und der Niederhalter (24) starr oder verschiebbar am Oberteil (2) angeordnet ist.

4. Formwerkzeug nach Anspruch 2 oder 3, **dadurch gekennzeichnet, dass** die Schnittplatte (35) über an ihr befestigte Bolzen (11) im Kühlblock (5) geführt ist und ihr Hub durch Bolzen (13) begrenzt wird.

5. Formwerkzeug nach einem der Ansprüche 2 bis 4, **dadurch gekennzeichnet, dass** die Formteile (25) auf einer relativ zum Rahmen (4) verschiebbaren Grundplatte (28) angeordnet sind.

6. Formwerkzeug nach Anspruch 5, **dadurch gekennzeichnet, dass** die Grundplatte (28) über eine Betätigungsmembran (57), einen Zylinder (37) oder einen Antrieb (49) bewegbar ausgebildet ist.

7. Formwerkzeug nach einem der Ansprüche 2 bis 4, **dadurch gekennzeichnet, dass** die Formteile (25, 54) relativ verschiebbar auf dem Rahmen (4) angeordnet sind.

8. Formwerkzeug nach Anspruch 7, **dadurch gekennzeichnet, dass** die Formteile (25, 54) auf einer Druckplatte (66) angeordnet sind, die über eine Betätigungsmembran (57) zum Rahmen (34) verschiebbar gestaltet ist.

9. Formwerkzeug nach einem der Ansprüche 2 bis 8, **dadurch gekennzeichnet, dass** die Verschiebung der Niederhalter (24) durch Druckluftzufuhr über Bohrungen (22) und /oder Federn (40) erzeugt wird.

10. Formwerkzeug nach einem der Ansprüche 3 bis 8, **dadurch gekennzeichnet, dass** die Verschiebung der Schnittstempel (20) motorisch oder pneumatisch erfolgt.

11. Formwerkzeug nach Anspruch 1, **dadurch gekennzeichnet, dass** die Schnittplatte (35) am Oberteil (2) starr befestigt ist und die Schnittstempel (20) und die Niederhalter (24) am Oberteil (2) verschiebbar angeordnet sind.

12. Formwerkzeug nach Anspruch 11, **dadurch gekennzeichnet, dass** die Verschiebung der Niederhalter (24) durch Druckluftzufuhr über Bohrungen (22) und /oder Federn (40) erzeugt wird.

13. Formwerkzeug nach Anspruch 11 oder 12, **dadurch gekennzeichnet, dass** die Verschiebung der Schnittstempel (20) motorisch oder pneumatisch erfolgt.

14. Formwerkzeug nach einem der Ansprüche 11 bis 14, **dadurch gekennzeichnet, dass** die Formteile (25, 54) auf einer relativ zum Rahmen (4) verschiebbaren Grundplatte (28) angeordnet sind.

15. Formwerkzeug nach Anspruch 14, **dadurch gekennzeichnet, dass** die Grundplatte (28) über eine Betätigungsmembran (57), einen Zylinder (37) oder einen Antrieb (49) bewegbar ausgebildet ist.

16. Formwerkzeug nach Anspruch 15, **dadurch gekennzeichnet, dass** die Formteile (25, 54) auf einer Druckplatte (66) angeordnet sind, die über eine Betätigungsmembran (57) zum Rahmen (34) verschiebbar gestaltet ist.

17. Formwerkzeug nach Anspruch 1, **dadurch gekennzeichnet, dass** die Schnittplatte (35) starr am Unterteil (3) und die Formteile (25) nachgiebig auf einer relativ zum Rahmen (34) über einen Antrieb (49) verschiebbaren Grundplatte (28) angeordnet sind, und dass der Schnittstempel (20) starr am Oberteil (2) befestigt und der Niederhalter (24) verschiebbar am Oberteil (2) angeordnet ist.

18. Formwerkzeug nach Anspruch 1, **dadurch gekennzeichnet, dass** die Schnittplatte (35) starr am Unterteil (3) und die Formteile (25) nachgiebig auf einer relativ zum Rahmen (34) über einen Antrieb (49) verschiebbaren Grundplatte (28) angeordnet sind, und dass der Schnittstempel (20) verschiebbar und der Niederhalter (24) starr oder verschiebbar am Oberteil (2) angeordnet ist.

19. Formwerkzeug nach Anspruch 17 oder 18, **dadurch gekennzeichnet, dass** die Verschiebung der Niederhalter (24) durch Druckluftzufuhr über Bohrungen (22) und /oder Federn (21) erzeugt wird.

20. Formwerkzeug nach Anspruch 18, **dadurch gekennzeichnet, dass** die Verschiebung der Schnittstempel (20) motorisch oder pneumatisch erfolgt.

21. Formwerkzeug nach Anspruch 1, **dadurch gekennzeichnet, dass** die Schnittplatte (35) so ausgebildet ist, dass sie mit dem Maschinenrahmen (39) der zugeordneten Thermoformmaschine verbindbar ist und am Oberteil (3) geführt wird und dass der Schnittstempel (20) starr am Oberteil (2) befestigt und der Niederhalter (24) verschiebbar am Oberteil (2) angeordnet ist.

22. Formwerkzeug nach Anspruch 1, **dadurch gekennzeichnet, dass** die Schnittplatte (35) so ausgebildet ist, dass sie mit dem Maschinenrahmen der zugeordneten Thermoformmaschine verbindbar ist und dass der Schnittstempel (20) verschiebbar und der Niederhalter (24) starr oder verschiebbar am Oberteil (2) angeordnet ist.

23. Formwerkzeug nach Anspruch 21 oder 22, **dadurch gekennzeichnet, dass** die Verschiebung der Niederhalter (24) durch Druckluftzufuhr über Bohrungen (22) und /oder Federn (21) erzeugt wird.

24. Formwerkzeug nach Anspruch 22, **dadurch gekennzeichnet, dass** die Verschiebung der Schnittstempel (20) motorisch oder pneumatisch erfolgt.

25. Formwerkzeug nach einem der Ansprüche 21 bis 24, **dadurch gekennzeichnet, dass** die Formteile (25, 54) auf einer relativ zum Rahmen (4) verschiebbaren Grundplatte (28) angeordnet sind.

26. Formwerkzeug nach Anspruch 25, **dadurch gekennzeichnet, dass** die Grundplatte (28) über eine Betätigungsmembran (57), einen Zylinder (37) oder einen Antrieb (49) bewegbar ausgebildet ist.

27. Formwerkzeug nach einem der Ansprüche 21 bis 24, **dadurch gekennzeichnet, dass** die Formteile (25, 54) relativ verschiebbar auf dem Rahmen (4) angeordnet sind.

28. Formwerkzeug nach Anspruch 27, **dadurch gekennzeichnet, dass** die Formteile (25, 54) auf einer Druckplatte (66) angeordnet sind, die über eine Betätigungsmembran (57) zum Rahmen (34) verschiebbar gestaltet ist.

29. Formwerkzeug nach einem der Ansprüche 1 bis 28, **dadurch gekennzeichnet, dass** in die Schnittplatte (35) Schnittringe (64) eingesetzt sind.

30. Formwerkzeug nach einem der Ansprüche 1 bis 29, **dadurch gekennzeichnet, dass** in der Schnittplatte (35) Kühlbohrungen (30) zum Durchleiten einer Kühlflüssigkeit angeordnet sind.

31. Formwerkzeug nach einem der Ansprüche 1 bis 30, **dadurch gekennzeichnet, dass** die Innenseite der Niederhalter (24) mit einer Isolation (41) ausgekleidet ist.

32. Formwerkzeug nach einem der Ansprüche 1 bis 31, **dadurch gekennzeichnet, dass** die der Folienbahn (1) zugewandte Seite der Niederhalter (24) von einer Kühlplatte (59) mit Kühlbohrungen (30) zum Durchleiten eines Kühlmediums umgeben ist.

33. Verfahren zum Tiefziehen und Ausstanzen von Behältern aus einer erwärmten thermoplastischen Kunststofffolie mit einem Formwerkzeug nach einem der Ansprüche 1 - 32, **gekennzeichnet durch** folgende Verfahrensschritte:
a) beim Schließen des Formwerkzeugs werden die Formteile (25) zur Anlage and die Schnittplatte (35) gebracht;
b) Formteile (25) und Schnittplatte (35) werden gemeinsam verschoben, bis die Kunststofffolie (1) zwischen Schnittplatte (35) und Niederhalter (24) eingespannt ist;
c) Tiefziehen der Behälter (4) **durch** Differenzdruck unter Zuhilfenahme der Streckhelfer (17);
d) Austrennen der Behälter (4) **durch** Relativverschiebung zwischen Schnittplatte (35) und Schnittstempel (20) und dabei Relativverschiebung der Formteile (25, 54) relativ zur Schnittplatte (35);
e) Öffnen des Formwerkzeugs und dabei Relativverschiebung zwischen der Schnittplatte (35) und den Schnittstempeln (20) sowie weitere Relatiwerschiebung zwischen der Schnittplatte (35) und den Formteilen (25, 54);
f) Entnehmen der Behälter (4) aus den Formteilen (25, 54).

34. Verfahren nach Anspruch 33, **dadurch gekennzeichnet, dass** zum Tiefziehen eine Druckdifferenz zwischen den beiden Seiten der Kunststofffolie (1) aufgebaut und die Kunststofffolie (1) in Richtung des Streckhelfers (17) vorgeformt wird, danach bei weiterem Anstehen dieser Druckdifferenz der Streckhelfer (17) in Richtung der Formteile (25) verschoben wird und anschließend die Druckdifferenz zwischen den beiden Seiten der Kunststofffolie (1) so gesteuert wird, dass sich die vorgeformte Kunststofffolie (1) an die Innenwände der Formteile (25, 54) anlegt.
